Europäisches Patentamt

European Patent Office

Office européen des brevets

(19)

(11) Numéro de publication : **0 353 127 B1**

(12)                    **FASCICULE DE BREVET EUROPEEN**

(45) Date de publication du fascicule du brevet :
**02.06.93 Bulletin 93/22**

(51) Int. Cl.$^5$ : **H01C 10/08,** G01D 5/16,
**H01C 10/48, H01C 10/10**

(21) Numéro de dépôt : **89402070.0**

(22) Date de dépôt : **21.07.89**

(54) **Potentiomètre commandable par une contrainte mécanique réduite.**

(30) Priorité : **25.07.88 FR 8810010**
**20.02.89 FR 8902185**

(43) Date de publication de la demande :
**31.01.90 Bulletin 90/05**

(45) Mention de la délivrance du brevet :
**02.06.93 Bulletin 93/22**

(84) Etats contractants désignés :
**AT BE CH DE ES FR GB GR IT LI LU NL SE**

(56) Documents cités :
**EP-A- 0 005 996**
**EP-A- 0 280 787**
**WO-A-81/03077**
**DE-A- 3 624 166**
**FR-A- 2 578 321**

(56) Documents cités :
**FR-A- 2 589 617**
**GB-A- 1 331 942**
**GB-A- 2 134 719**
**US-A- 3 377 604**
**US-A- 4 052 901**
**MACHINE DESIGN, vol. 41, no. 19, 21 Août**
**1969, page 115:** "Squeezed tape monitors
**level or position**"

(73) Titulaire : **M C B**
**48 Avenue Kléber Courlis I**
**F-92700 Colombes (FR)**

(72) Inventeur : **Caullet, Alain**
**23, rue des Morillons**
**F-75015 Paris (FR)**

(74) Mandataire : **Fréchède, Michel et al**
**Cabinet Plasseraud 84, rue d'Amsterdam**
**F-75009 Paris (FR)**

## Description

L'invention est relative aux potentiomètres, c'est-à-dire aux appareils comportant :

- des organes statiques, constitués par une piste résistive, un collecteur conducteur et des connexions, à savoir en général deux premières connexions reliées aux extrémités de la piste résistive et une troisième connexion reliée au collecteur conducteur; et
- un organe mobile, constitué généralement par un curseur, qui commande la mise en contact électrique du collecteur avec une zone réduite de la piste résistive, zone qui est en correspondance avec la position de l'organe mobile.

Suivant un montage classique, les deux premières connexions sont soumises à une différence de potentiel déterminée, fixe ou variable, tandis que sur la troisième connexion est disponible une tension qui est une fraction de cette différence de potentiel, fraction qui dépend de la position de ladite zone réduite sur la piste résistive et donc de la position de l'organe mobile.

De ce fait un potentiomètre peut servir par exemple d'organe de commande, d'organe de réglage, de capteur de position ou de capteur de déplacement.

La fiabilité et la durée de vie d'un potentiomètre classique à curseur frottant sont limitées par le frottement du curseur et l'usure que ce frottement entraîne.

Il est difficile de réaliser un potentiomètre étanche de ce type, du fait de la nécessité de permettre un déplacement du curseur et de commander ce déplacement, à moins de mettre en oeuvre l'effet Hall ou des moyens opto-électroniques, qui présentent d'autres inconvénients.

Ces deux inconvénients des potentiomètres classiques peuvent être palliés par la mise en oeuvre de la demande de brevet français publiée n° 2.578.321 de la demanderesse décrivant, en particulier, un capteur potentiométrique dont la piste résistive est protégée par une membrane portant la piste collectrice et dans lequel les deux pistes sont appliquées l'une contre l'autre par un élément qui peut être soit le doigt humain, soit un curseur solide, soit un jet de fluide. Une telle structure, qui définit un "potentiomètre à membrane", nécessite, pour mettre en contact électrique les deux pistes, la mise en oeuvre d'une certaine contrainte mécanique, dépassant la valeur de 0,1 N et le plus souvent plusieurs N.

On notera également que les potentiomètres de la technique antérieure présentent un certain "bruit" électrique, qui résulte des variations de la résistance de contact entre collecteur conducteur et piste résistive dans la zone de contact, et un manque de régularité de la tension de sortie par la troisième connexion, qui est la tension de sortie utile du potentiomètre.

La demande allemande publiée n° 3.624.166 décrit un commutateur à plusieurs éléments souples en feuille et une résistance variable.

L'invention vise à pallier ces inconvénients des potentiomètres des techniques antérieures (de type classique ou de type à membrane selon la demande de brevet n° 2.578.321) en permettant de réaliser un potentiomètre qui est commandable par une contrainte mécanique réduite, qui présente un bruit électrique réduit, qui détermine une tension de sortie régulière, qui est fiable, qui présente une longue durée de vie, grâce à une usure très faible des composants, et qui peut être rendu étanche, ou pour le moins être aisément protégé contre les agressions extérieures, telles que poussières.

Ces objets sont atteints avec le potentiomètre selon l'invention qui comprend une piste résistive avec une connexion électrique à chaque extrémité, un collecteur conducteur avec une troisième connexion et un curseur, caractérisé en ce que le collecteur est constitué par une bande de tissu conducteur de l'électricité.

Ce tissu peut être réalisé soit en fibres conductrices, soit en fibres non conductrices rendues conductrices, par un traitement de surface approprié, sur la totalité ou une partie de leur surface.

Avantageusement le tissu peut être constitué par

- un tissu en fibres de polyester recouvertes par une pellicule mince de nickel;
- un tissu en fibres d'acier inoxydable;
- un tissu en fibres de cuivre;
- un tissu en fibres de carbone conducteur.

Selon un premier mode de réalisation, le potentiomètre selon l'invention est caractérisé en ce qu'il comporte une bande de ruban auto-adhésif sur les deux faces, disposé, sur au moins un de ses côtés longitudinaux, entre la piste résistive et le collecteur en tissu conducteur pour assurer une séparation entre ceux-ci, et en outre

- soit une bande de ruban auto-adhésif sur les deux faces, disposé également sur l'autre de ses côté longitudinaux, entre la piste résistive et le collecteur en tissu conducteur,
- soit des moyens empêchant le contact spontané, en l'absence de la pression du curseur, de la piste résistive et du collecteur en tissu conducteur.

Selon un deuxième mode de réalisation, le potentiomètre selon l'invention comprend :

- une piste résistive allongée dans une direction, avec une connexion électrique à chaque extrémité;
- un collecteur allongé dans la même direction, disposé en regard de ladite piste conductrice et constitué par une bande de tissu conducteur de l'électricité, avec une troisième connexion; et
- un organe mobile déplaçable, dans la direction de l'allongement de la piste résistive et du collecteur conducteur et apte à commander la mise en contact électrique du collecteur et de la piste dans une zone réduite dont la position dans ladite direction est fonction de la position de l'organe mobile;

et est caractérisé en ce qu'il comporte des moyens pour maintenir un premier bord longitudinal du collecteur conducteur écarté du premier bord longitudinal correspondant de la piste résistive, tandis que le second bord longitudinal du collecteur conducteur est libre de se déplacer par rapport au second bord longitudinal de la piste résistive et venir en contact avec celui-ci sous le contrôle de l'organe mobile.

Selon un troisième mode de réalisation de l'invention, pour réduire les variations de résistance de contact et donc le bruit électrique, on prévoit un collecteur conducteur supplémentaire ou auxiliaire commandé en synchronisme avec le collecteur conducteur principal.

Avantageusement à chaque collecteur principal ou auxiliaire on adjoint un contre-collecteur symétrique.

L'invention pourra être bien comprise à l'aide du complément de description qui suit, ainsi que des dessins ci-annexés, lesquels complément et dessins sont, bien entendu, donnés surtout à titre d'indication.

La figure 1 est une vue, en perspective, d'un potentiomètre selon le premier mode de réalisation de l'invention.

La figure 2 est une vue éclatée, également en perspective, de ce potentiomètre.

Les figures 3 et 4 sont des coupes, à échelle agrandie, respectivement par III-III et par IV-IV, de la figure 1.

La figure 5 est une vue, en perspective, d'un potentiomètre selon le deuxième mode de réalisation de l'invention.

La figure 6 est une coupe par VI-VI de la figure 5.

La figure 7 est une vue, en perspective, d'un potentiomètre selon une variante du deuxième mode de réalisation de l'invention.

La figure 8 est une coupe par VIII-VIII de la figure 7.

La figure 9 est une coupe, analogue à celle de la figure 8, illustrant une autre variante du deuxième mode de réalisation d'un potentiomètre selon l'invention.

La figure 10 est une coupe, analogue aux coupes des figures 3, 6, 8 et 9, illustrant le troisième mode de réalisation.

Les figures 11 et 12, enfin, sont des demi-coupes illustrant deux formes particulières du collecteur conducteur, savoir celle d'un disque et celle d'une couronne, respectivement.

Selon l'invention, se proposant de réaliser un potentiomètre commandable par une contrainte mécanique réduite, on s'y prend comme suit ou d'une manière analogue.

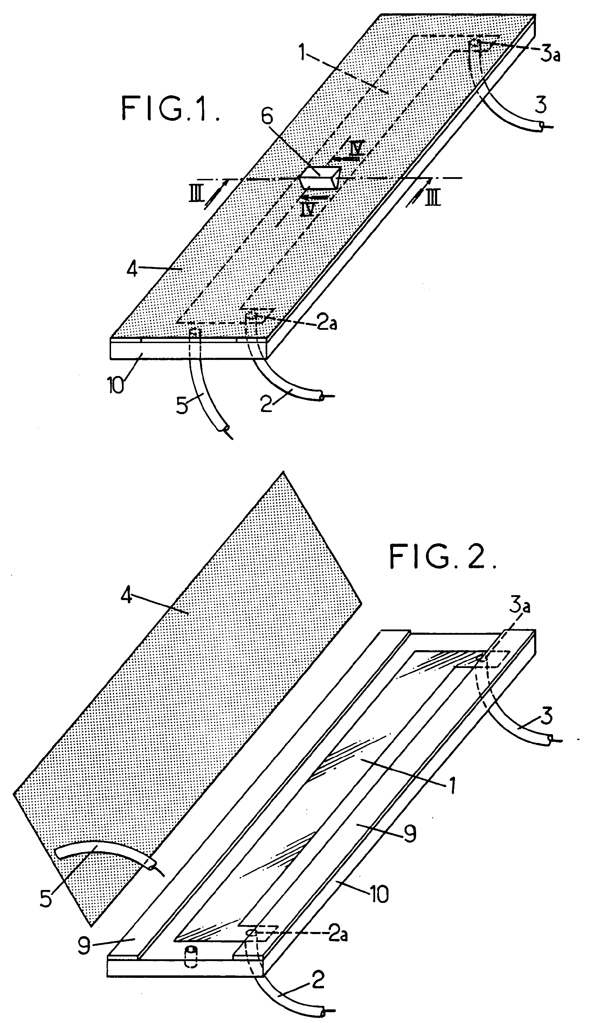

## PREMIER MODE DE REALISATION (FIGURES 1 A 4)

En se référant tout d'abord aux figures 1 et 2, on voit qu'un potentiomètre selon l'invention comporte tout d'abord, à la manière connue : une piste résistive 1 avec deux connexions électriques 2,3 reliées électriquement respectivement aux extrémités 2a et 3a de la piste 1; un collecteur conducteur 4 avec une troisième connexion 5 reliée électriquement à ce collecteur conducteur; et un curseur 6 (visible sur la figure 1 et non pas sur la figure 2).

Conformément à la caractéristique essentielle de l'invention, le collecteur conducteur 4 est constitué par une bande de tissu 8 conductrice de l'électricité.

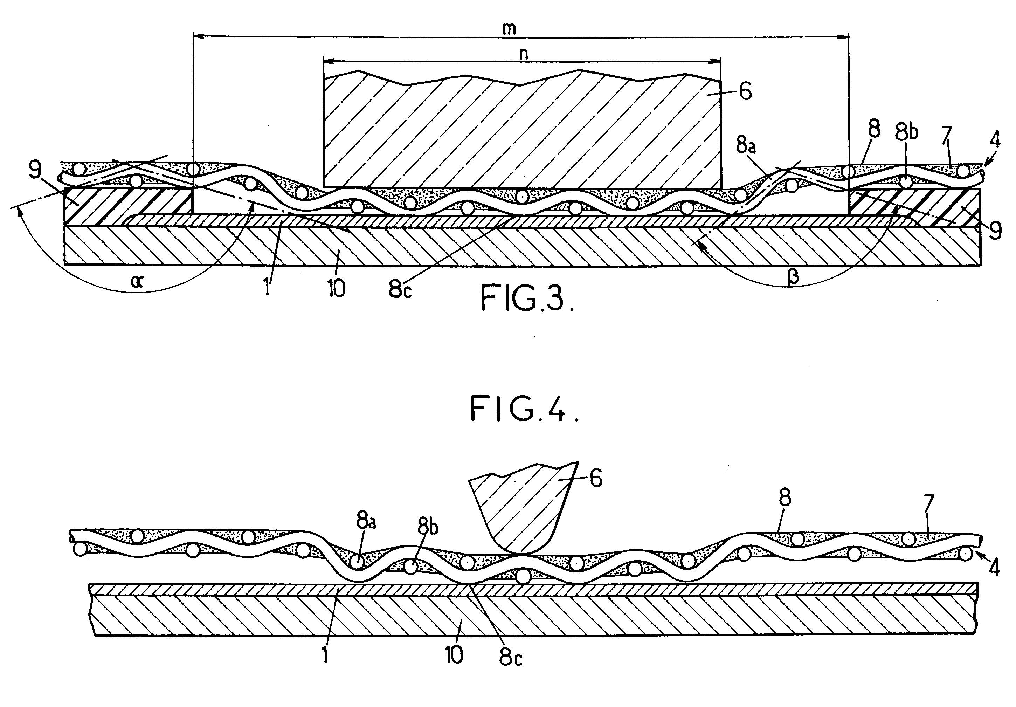

En particulier, comme visible sur les figures 3 et 4, le tissu 8 constituant le collecteur conducteur 4 est constitué par des fibres entrecroisées 8a et 8b.

Un des avantages des tissus sur les pellicules massives, pour constituer le collecteur conducteur, est leur bien plus grande souplesse, qui peut être encore mieux exploitée s'ils sont utilisés suivant leur biais; en outre les tissus travaillent, en réponse à une pression appliquée par le curseur, en flexion et non pas à la traction, comme c'est le cas pour une pellicule massive, d'où une plus grande déformation élastique et reversible exigeant une contrainte mécanique réduite sur le curseur.

L'espace de hors-contact entre la piste résistive 1 et le tissu conducteur 8 constituant le collecteur 4 peut être obtenu aux deux bords longitudinaux ou latéraux visibles sur les figures 2 et 3 au moyen de deux bandes 9 auto-adhésives sur leurs deux faces, ayant une épaisseur comprise entre environ 0,01 mm et environ 5 mm.

Ces bandes 9 sont portées par un support 10, visible également sur les figures et réalisé en une matière isolante de l'électricité; ce support 10 porte également la piste résistive 1.

Au passage du curseur 6 et sous la pression exercée par celui-ci, les fibres 8a,8b du tissu 8 se redressent au niveau de leurs multiples coudes et s'allongent en travaillant à la flexion et non pas à la traction. Sur la figure 3 on a illustré les angles α et β de deux coudes et, du fait de cet allongement à la flexion, on a β > α, l'angle α correspondant à une extrémité des fibres 8a portée par un ruban 9.

En outre chaque coude convexe du zig-zag de chaque fibre 8a,8b est susceptible de constituer un contact électrique avec la piste résistive 1, d'où une multiplicité de contacts effectifs avec cette piste, qui croît avec le nombre de mailles de fibres au centimètre. Il y a donc intérêt à avoir une maille aussi petite que possible. Le grand nombre de points de contacts entre une fibre conductrice 8a,8b et la piste résistive 1 assure une faible résistance électrique de contact. Cette résistance peut encore être réduite et stabilisée grâce à un revêtement en un métal noble (or, argent, platine, palladium ou un alliage de deux ou plusieurs de ces métaux) sur le tissu 8, une couche intermédiaire de nickel étant éventuellement disposée entre le tissu et le revêtement en métal noble.

Le tissu 8 est réalisé soit en fibres conductrices, soit en fibres non conductrices rendues conductrices, par un traitement approprié, sur la totalité ou une partie de leur surface.

Avantageusement le tissu 8 peut être constitué par

- un tissu "tergal" en fibres de polyester recouvertes par une pellicule mince de nickel, du type commercialisé sous la désignation "Metalen" et fabriqué par la "Fabrique Zurichoise de Gazes à Bluter", Ruschlikon (Suisse);
- un tissu en fibres d'acier inoxydable du type commercialisé sous la désignation "Bopp-SD" par la société "Fabrique de Toiles Métalliques Bachmannweg" de Zurich (Suisse);
- un tissu en fibres de cuivre;
- un tissu en fibres de carbone conducteur.

On notera qu'il est possible d'imperméabiliser le tissu 8, qui constitue le collecteur conducteur 4, en bouchant partiellement les mailles sans en couvrir les convexités 8c des coudes dirigées vers la piste résistive 1 (qui doivent rester conductrices), par application d'un enrobage ou d'une pellicule plastique, référencé 7 sur les figures 3 et 4, apte à conserver sa souplesse au tissu; en particulier on peut réaliser l'imperméabilisation en utilisant une émulsion ou une pellicule de photoresist suivant les techniques bien connues dans l'art sérigraphique.

Cette imperméabilisation permet de protéger le contact, entre piste 1 et tissu 8 au niveau du curseur 6, des poussières et des fluides et/ou de réaliser le curseur sous la forme d'un jet liquide ou gazeux mobile.

On va donner ci-après des exemples de mises en oeuvre du premier mode de réalisation de l'invention.

## EXEMPLE 1

La piste résistive 1 est en une matière plastique thermodurcissable chargée de carbone conducteur, ayant une résistance de 376 $\Omega/\square$ , de largeur 8 mm, déposée sur un substrat 10 en polyimide.

Le collecteur conducteur 4 est constitué par une toile (ou tissu) 8 en acier inoxydable Bopp-SD 180 mesh (71 mailles/cm, pas de la trame 140 µm, ∅ fil 45 µm, épaisseur 90 µm) nickelée et dorée, appliquée sans tension mécanique suivant le droit fil.

Les deux bandes 9 sont auto-adhésives sur leurs deux faces et ont les dimensions suivantes: largeur 6 mm, épaisseur 0,1 mm; ces bandes sont disposées à un intervalle de 7 mm l'une de l'autre (distance m sur la figure 3).

Le curseur 6 en V est réalisé en polyéthylène haute densité et il a les dimensions suivantes : rayon de l'arête 0,5 mm et largeur de 0,9 mm (distance n sur la figure 3).

Sous une force pressante de 0,012 N (soit 1,2 gramme-force) le nombre de points de contacts entre le tissu ou toile 8 constituant le collecteur conducteur 4 et la piste résistive 1 est de 12 à 18.

On obtient ainsi un contact électrique de résistance constante égale à 200 ohms environ.

Dans le tableau I ci-après on indique la résistance de contact en ohms en fonction de la force pressante en mN.

## EXEMPLE 2

La piste résistive 1 est également en un plastique conducteur et elle a une résistance de 960 $\Omega/\square$ et une largeur de 8 mm.

Le collecteur conducteur 4 est un tissu ou toile 8 d'acier inoxydable Bopp 350 mesh (138 mailles/cm, pas de la trame 85 µm, ∅ fil 25 µm, épaisseur 60 µm), ni nickelée, ni dorée.

Les bandes adhésives 9 et le curseur 6 sont réalisés de la même manière que dans l'exemple 1.

On obtient un nombre de points de contact de l'ordre de 60 et la résistance de contact est de 1200 ohms.

Dans le tableau I on a donné pour l'exemple 2, comme pour l'exemple 1, les valeurs de la résistance de contact en ohms en fonction de la force pressante en mN.

## TABLEAU I

| : Force pressante : | Résistance de contact: | : | : |
|---|---|---|---|
| : en mN : | en $\Omega$ | : | : |
| $< 6$ | $> 10^6$ | | |
| 6 | 720 | | |
| 7,2 | 460 | | |
| 8,4 | 287 | | |
| 9,6 | 254 | EXEMPLE 1 | |
| 10,8 | 234 | | |
| 12 | 227 | | |
| 18 | 188 | | |
| 24 | 200 | | |
| $< 6$ | $> 10^6$ | | |
| 6 | 1420 | | |
| 7,2 | 1300 | | |
| 8,4 | 1345 | | |
| 9,6 | 1290 | EXEMPLE 2 | |
| 10,8 | 1218 | | |
| 12 | 1240 | | |
| 18 | 1155 | | |
| 24 | 1150 | | |

### EXEMPLE 3

La piste résistive a une résistance de 801,3 $\Omega/\square$ et une largeur de 10 mm.

Le collecteur est réalisé en un tissu à fibres d'acier inoxydable Bopp 180 mesh (71 mailles/cm, pas de la trame 140 $\mu$m, $\varnothing$ fil 45 $\mu$m, épaisseur 90 $\mu$m), nickelé et doré, appliqué sans tension mécanique suivant le droit fil.

Les bandes auto-adhésives ont une largeur de 4 mm et une épaisseur de 0,023 mm. L'intervalle m de la figure 3 étant de 7,5 mm. Le curseur 6 a la forme d'un V avec un rayon de l'arête de 0,5 mm et une largeur n sur la figure 3 de 1,8 mm.

Avec une force pressante de 0,024 N (2,4 grammes-force) le nombre de points de contact est de l'ordre de 30.

Le tableau II ci-après indique, en fonction de la force pressante en mN, la résistance de contact dynamique (RCD) en ohms, le bruit et la régularité de la tension de sortie (RTS) également désignée sous l'appellation améri-CAINE DE "OUTPUT SMOOTHNESS".

## T A B L E A U   I I

| Force pressante en mN | RCD en Ω | Bruit en Ω | RTS $10^{-4}$ (rapport sans dimension) |
|---|---|---|---|
| 2,4 | 2000 | 2000 | |
| 5,9 | 500 | 400 | |
| 8,2 | 300 | 150 | 6 |
| 11,8 | 200 | 100 | 5 |
| 17,7 | 150 | 60 | |
| 23,5 | 120 | 45 | 4 |

On rappelle que la résistance de contact dynamique est mesurée en entraînant le curseur du potentiomètre, en particulier à une vitesse de 30 mm par seconde, le bruit correspondant aux variations de la résistance de contact dynamique lors de cet entraînement du curseur. Quant à la RTS (également pour une vitesse de déplacement du curseur de 30 mm/s), elle correspond au dixième de la variation maximale (en mV) en fonction de la course électrique/100.

Si on veut comparer la contrainte mécanique réduite ou force pressante qui peut être mise en oeuvre avec un potentiomètre selon l'invention à celles dans les potentiomètres de la technique antérieure, il y a lieu de noter que dans ce dernier cas elle est exceptionnellement inférieure à 60 grammes-force, soit 0,6 N, mais généralement beaucoup plus élevée.

On peut prévoir, suivant les modes de mise en oeuvre :
- de revêtir d'un agent de glissement (lubrifiant solide ou liquide) la face du tissu 8 dirigée vers le curseur 6 afin de réduire l'usure du curseur et du tissu sous l'effet du déplacement du curseur et de réduire la force nécessaire pour réaliser ce déplacement;
- de maintenir mécaniquement le tissu 8, non pas sur ses deux côtés par deux bandes 9 auto-adhésives sur leurs deux faces, mais d'un seul côté par une telle bande 9, le tissu étant empêché de toucher spontanément (en l'absence de la pression du curseur) la piste conductrice 1 soit du fait qu'il présente une forme incurvée qui l'en écarte, soit en s'appuyant sur l'autre côté sur une bande non adhésive; et/ou
- de réaliser, comme évoqué précédemment, le curseur sous la forme d'un jet, liquide ou gazeux, mobile.

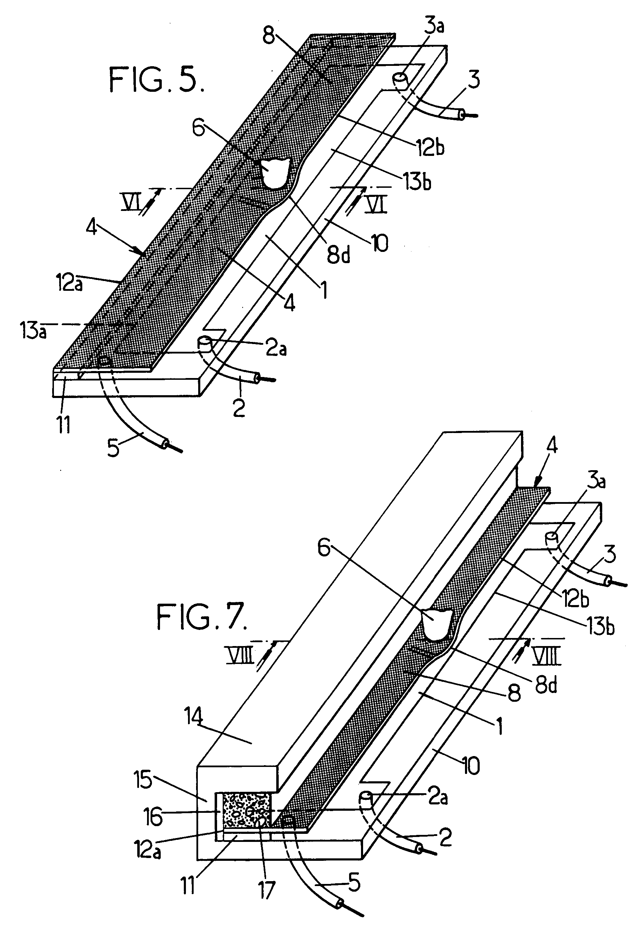

DEUXIEME MODE DE REALISATION (FIGURES 5 A 9)

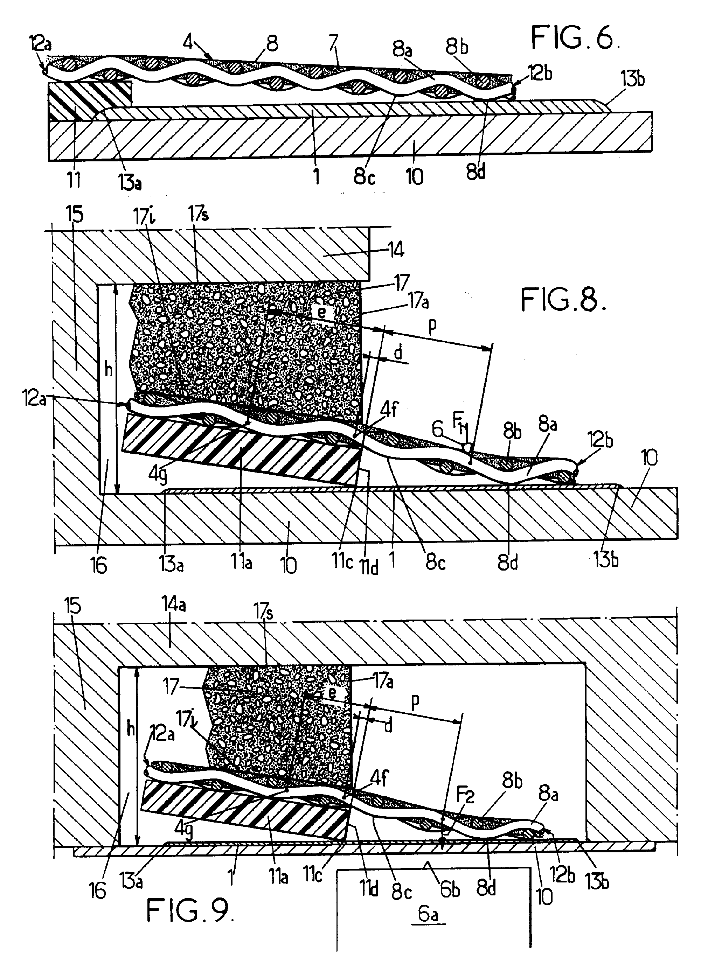

En se référant aux figures 5 et 6, d'une part, et aux figures 7 et 8, d'autre part, on voit qu'un potentiomètre selon le deuxième mode de réalisation de l'invention comporte tout d'abord, comme dans le premier mode de réalisation : une piste résistive 1 avec deux connexions électriques 2,3 reliées électriquement respectivement aux extrémités 2a et 3a de la piste 1; un collecteur conducteur 4 avec une troisième connexion 5 reliée électriquement à ce collecteur conducteur; et un curseur 6.

Comme dans le premier mode de réalisation, le collecteur conducteur 4 est constitué, dans le second mode de réalisation, par une bande de tissu 8 conductrice de l'électricité.

En particulier, comme visible sur les figures 6 et 8, le tissu 8 constituant le collecteur conducteur 4 est constitué par des fibres conductrices entrecroisées 8a et 8b.

Dans la réalisation des figures 5 et 6, pour pouvoir commander le contact électrique, dans une zone réduite, entre la bande de tissu 8 constituant le collecteur conducteur 4 et la piste résistive 1, sous l'effet d'une force pressante $F_1$ (celle du curseur 6), plus faible que la force pressante appliquée par le curseur dans le premier mode de réalisation, on fait comporter au potentiomètre des moyens, constitués par une cale fixe 11, pour maintenir un premier bord longitudinal 12a du collecteur conducteur 4, c'est-à-dire de la bande de tissu 8, écarté, en position fixe, du premier bord longitudinal ou latéral correspondant 13a de la piste résistive 1, tandis que le second bord longitudinal ou latéral 12b du collecteur 4 peut se déplacer par rapport au second bord longitudinal 13b de la piste 1.

La cale 11 est constituée, dans le mode de réalisation illustré sur les figures 5 et 6, par une bande auto-adhésive sur ses deux faces, ayant par exemple une épaisseur comprise entre environ 0,01 mm et environ 5 mm; cette cale 11 et la piste résistive 1 sont portées par un support 10 réalisé en une matière isolante de l'électricité.

Au passage du curseur 6 et sous la pression exercée par celui-ci, les fibres 8a,8b du tissu 8 se redressent au niveau de leurs multiples coudes et s'allongent en travaillant à la flexion et non pas à la traction.

En outre chaque coude convexe du zig-zag de chaque fibre 8a,8b est susceptible de constituer un contact électrique avec la piste résistive 1, d'où une multiplicité de contacts effectifs avec cette piste, qui croît avec le nombre de mailles de fibres au centimètre. Il y a donc intérêt à avoir une maille aussi petite que possible. Le grand nombre de points de contacts entre une fibre conductrice 8a,8b et la piste résistive 1 assure une faible résistance électrique de contact. Cette résistance peut encore être réduite et stabilisée, comme dans le premier mode de réalisation, grâce à un revêtement en un métal noble (or, argent, platine, palladium ou un alliage de deux ou plusieurs de ces métaux) sur le tissu 8, une couche intermédiaire de nickel étant éventuellement disposée entre le tissu et le revêtement en métal noble. On peut également enrober le bord 12b du tissu 8 d'une composition polymère conductrice de l'électricité (polymère chargé argent ou carbone).

Le tissu 8 est réalisé, comme dans le premier mode de réalisation, soit en fibres conductrices, soit en fibres non conductrices rendues conductrices, par un traitement approprié, sur la totalité ou une partie de leur surface.

Avantageusement le tissu 8 peut être constitué par
- un tissu "tergal" en fibres de polyester recouvertes par une pellicule mince de nickel, du type commercialisé sous la désignation "Metalen" et fabriqué par la "Fabrique Zurichoise de Gazes à Bluter", Ruschlikon (Suisse);
- un tissu en fibres d'acier inoxydable du type commercialisé sous la désignation "Bopp-SD" par la société "Fabrique de Toiles Métalliques Bachmannweg" de Zurich (Suisse);
- un tissu en fibres de cuivre;
- un tissu en fibres de carbone conducteur.

On notera qu'il est possible d'imperméabiliser le tissu 8, qui constitue le collecteur conducteur 4, en bouchant partiellement les mailles sans en couvrir les convexités 8c des coudes dirigées vers la piste résistive 1 (qui doivent rester conductrices), par application d'un enrobage ou d'une pellicule plastique, référencé 7 sur les figures 3 et 4, apte à conserver sa souplesse au tissu; en particulier on peut réaliser l'imperméabilisation en utilisant une émulsion ou une pellicule de photoresist suivant les techniques bien connues dans l'art sérigraphique.

Du fait que le bord 12b du collecteur conducteur 4 reste libre, l'effort $F_1$ qui s'y concentre sous l'effet du curseur 6, même s'il est très faible, provoque un contact électrique en 8d, franc, stable et présentant une conductivité électrique suffisante.

Une deuxième réalisation de ce deuxième mode est illustrée sur les figures 7 et 8, sur lesquelles on a utilisé les mêmes références que sur les figures 5 et 6 pour désigner les éléments correspondants.

Dans cette deuxième réalisation on tire avantage non seulement de la souplesse du tissu 8 constituant le collecteur conducteur 4, suivant la direction d'allongement de la piste résistive 1 et du collecteur conducteur 4, mais également d'un effet de fléau de balance.

Dans la réalisation des figures 7 et 8, le substrat 10, avec la piste résistive 1, porte une pièce de support 14 par l'intermédiaire d'une entretoise 15, en formant ainsi un canal en U, référence 16, de hauteur h. Dans ce canal 16 est disposé un élément élastique ou ressort 17, constitué, dans le mode de réalisation illustré, par une pièce ayant la forme d'un parallellipipède rectangle, en mousse d'une matière synthétique, fixée sur la pièce de support 14, le bord 12a du collecteur conducteur 4 étant solidaire de la surface inférieure 17i (sur la figure 8) du ressort 17, en particulier de la pièce en mousse, opposée à la surface supérieure 17s (sur la figure 8) solidaire de la pièce de support 14, tandis qu'une cale 11a, pouvant basculer sur son arête 11c, est disposée entre le bord 12a du collecteur conducteur 4 et la piste résistive 1, en étant solidaire du collecteur 4.

Comme illustré sur la figure 8, au moins la plus grande partie de la face 11d de la cale 11 est disposée à droite (sur la figure) du barycentre 4f du collecteur 4. En d'autres termes une partie de la cale 11a se trouve disposée entre le barycentre 4f et la piste résistive 1.

Plus particulièrement on s'arrange pour que le barycentre 4f de la section (dans le plan de la figure 8) du collecteur conducteur 4 se trouve au voisinage de la face 11d de la cale 11.

Du fait de cette structure, la cale 11a est, comme illustré sur la figure 8, plaquée, en l'absence de la force pressante $F_1$ du curseur 6, contre la piste résistive 1 ou son substrat 10 par le ressort 17 en maintenant ainsi le collecteur conducteur 4 écarté de cette piste.

Sous l'action de la force $F_1$ appliquée par le curseur 6 sur le collecteur conducteur 4, la cale 11a bascule

7

autour de son arête 11c en comprimant partiellement le ressort 17 par le bord 12b du collecteur 4 qui vient en contact en 8d avec la piste résistive 1.

La distance d (dans la direction perpendiculaire à la direction du bord latéral 11d de la cale 11 qui contient l'arête 11c) entre le barycentre 4f et l'arête 11c est choisie nettement inférieure à la distance p entre la zone d'application de la force $F_1$ et l'arête 11c (considérée dans la même direction que la distance d) pour qu'une accélération, un choc, un déplacement ou un effet d'apesanteur sur le potentiomètre ne puisse provoquer un contact intempestif entre le conducteur collecteur 4 et la piste résistive 1 en l'absence de force $F_1$, tout en n'empêchant pas ce contact sous l'effet d'une force $F_1$ même faible.

Les liaisons mécaniques entre les différents éléments assurent l'immobilisation en translation de la partie rotative autour de l'arête 11c du potentiomètre par rapport au support fixe 10 avec sa piste résistive 1, en évitant ainsi entre autres le contact mécanique et donc le blocage des éléments 11a, 12a et 17 contre l'entretoise 15.

Le potentiomètre selon les figures 7 et 8 présente de nombreux paramètres qui peuvent être réglés suivant les applications, à savoir

- les distances d et p précitées, ainsi que la distance e entre le barycentre 4f et le point 4g d'application de la force du ressort 17 (dans la même direction que la détermination des distances d et p),
- la force du ressort 17,
- l'épaisseur de la cale 11a,
- la raideur ou souplesse du tissu 8 formant le collecteur conducteur 4, les fils de trame et de chaîne pouvant avoir des raideurs différentes, ce qui permet de choisir une certaine souplesse dans l'axe d'allongement du collecteur conducteur 4 et une certaine raideur dans le sens perpendiculaire.

Ces paramètres sont réglés en particulier en fonction des caractéristiques de la force $F_1$ appliquée dans le mode de réalisation illustré par un organe de commande mobile du type curseur solide 6; toutefois cet organe de commande mobile pourrait être constitué soit par un élément solide autre qu'un curseur, soit par un jet fluide (jet liquide ou jet gazeux), soit par un moyen immatériel résultant de phénomènes agissant à distance, tels qu'un champ à action localisée.

Du fait que le potentiomètre selon les deux réalisations des figures 5 et 6, d'une part, et 7 et 8, d'autre part, est ainsi actionnable par une force $F_1$ résultant en particulier d'un champ à action localisée, il peut être réalisé sous la forme d'un ensemble absolument étanche en raison de l'absence de joint dynamique, il peut être commandé par une force $F_1$ très faible et il peut être libéré de tout contact matériel avec l'organe de commande créateur du champ à action localisée.

Une variante de la réalisation des figures 7 et 8 est illustrée sur la figure 9 qui est une coupe analogue à la figure 8 et dans laquelle on retrouve l'ensemble des éléments de la figure 8, à part le remplacement de la force de pression $F_1$, résultant de la pression du curseur 6, par une force de traction $F_2$ obtenue au moyen d'un aimant déplaçable 6a. En outre l'ensemble du substrat 10, de l'entretoise 15 et du support 14a constitue un boîtier fermé, assurant ainsi l'étanchéité du potentiomètre, l'organe mobile, à savoir l'aimant 6a, et les moyens qui commandent le déplacement de celui-ci étant externes audit boîtier.

Pour pouvoir bénéficier du champ magnétique produit par l'aimant 6a, on réalise le collecteur conducteur 4 au moyen d'un tissu constitué par des fils 8a et/ou 8b en un matériau magnétique, le collecteur conducteur présentant, en regard de la piste résistive 1, une surface apte à assurer avec elle un contact électrique conducteur et stable.

Dans le potentiomètre selon la figure 9, on peut remplacer l'aimant permanent 6a par un solénoïde traversé par un courant électrique et constituant un électro-aimant.

Dans une autre variante du potentiomètre selon la figure 9, au lieu de réaliser les fils 8a et/ou 8b en un matériau magnétique, on peut mettre en oeuvre des fils 8a et 8b en un matériau amagnétique électriquement conducteur, comme dans le cas des figures 5-6 et 7-8, et prévoir, au-dessus (dans le sens de la figure 9) du tissu 8 amagnétique, un élément presseur en un matériau magnétique, cet élément, qui est le seul sollicité par le champ magnétique produit par l'aimant 6a ou l'électro-aimant prévu à la place de celui-ci, étant par exemple un feuillard, un tissu, un fil longitudinal ou une bille; en particulier une bille magnétique, se déplaçant sur le tissu 8 pour suivre les déplacements de l'aimant 6a ou de l'électro-aimant, présente l'avantage de localiser les effets du champ magnétique sur une surface très réduite et par suite d'améliorer la résolution du potentiomètre.

A titre d'exemple, on peut réaliser les fils 8a et/ou 8b ou l'élément presseur en un ou plusieurs des matériaux magnétiques "doux" suivants : fer pur, acier doux, alliage fer-silicium, alliage fer-nickel, alliage fer-cobalt, nickel, nuances magnétiques d'aciers inoxydables, et constituer l'aimant 6a un ou plusieurs des matériaux magnétiques "durs" suivants : ferrite, alliage fer-nickel-aluminium-cobalt, alliage fer-néodyne-bore, alliage cobalt-terres rares, notamment ceux présentant une forte induction rémanente, un champ coercitif élevé et une énergie magnétique intense.

On va maintenant donner un exemple d'un potentiomètre selon la figure 9.

EXEMPLE 4 :

| | |
|---|---|
| hauteur h du canal 16 | : 4,6 mm |
| épaisseur de la cale 11a | : 0,4 mm |
| largeur de la cale 11a | : 6 mm |
| collecteur 4 : | tissu 8 en fibres 8a, 8b d'acier doux recuit, nickelé et doré, 80 mesh (32 mailles/cm, pas de trame 318 µm, diamètre du fil 140 µm, épaisseur 0,3 mm); largeur totale 11 mm, largeur du bord libre 12b 5 mm; |
| ressort 17 : | mousse organique synthétique élastique d'épaisseur 6 mm avant compression et de largeur 4 mm; |
| paramètres du fléau : | e= 2 mm, p = 2,5 mm, d = 0,5 mm; |

champ magnétique produit par l'aimant permanent 6a en alliage néodyme-fer-bore du type Néomax-27H de la société japonaise Sumitomo, rémanence 1,06 tesla, en forme de parallélépipède rectangle de face 17a de 5 x 15 mm et d'épaisseur 3 mm;

champ perpendiculaire à la face 17a : champ coercitif de 811 kA/m, énergie magnétique 215 kJ/m$^3$;

distance entre la face 6b de l'aimant 6a et le collecteur 4 : 0,95 mm avant attraction et 0,55 mm pendant l'attraction;

piste résistive 1 en une matière plastique conductrice de 544 ohms/□, largeur 10 mm et longueur électrique utile 455 mm;

linéarité du signal de sortie : 1 %

résistance de contact dynamique : 150 ohms

résistance de bruit : 100 ohms

jeu de renversement: 1 %

Le potentiomètre selon les figures 1 à 9 ne comporte qu'un seul collecteur 4 et par suite qu'une seule zone de contact entre ce collecteur 4 et la piste résistive 1 dont les imperfections de surface peuvent causer des variations de la résistance de contact et donc un bruit.

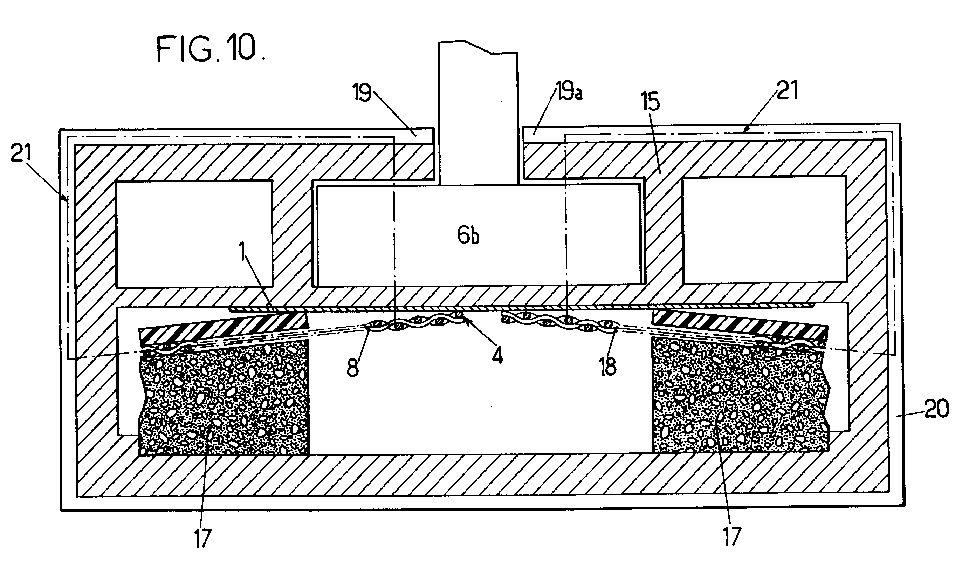

Pour limiter ces variations de résistance, on prévoit, selon la figure 10, un deuxième collecteur 18 semblable au collecteur 4 et commandé simultanément avec ledit collecteur 4 par le même aimant 6b.

Bien que l'aimant 6b agisse sur le collecteur magnétique 4 et éventuellement le collecteur magnétique 18 à distance, il est soumis à la force d'attraction se développant par réaction entre le collecteur ou les collecteurs et lui. Les frottements produits par cette force sur les organes de guidage de l'aimant 6b risquent d'imposer une valeur exagérément élevée à la force d'entraînement de l'aimant 6b et d'accroître l'usure de ces organes de guidage.

Une réduction ou la suppression de cette réaction du collecteur 4 ou des collecteurs 4 et 18 sur l'aimant 6b peut être obtenue en disposant un contre-collecteur 19 symétriquement au premier collecteur 4, ou deux contre-collecteurs 19 et 19a symétriquement aux collecteurs 4 et 18.

Une variante consiste à substituer au contre-collecteur 19, ou aux contre-collecteurs 19 et 19a, un deuxième potentiomètre, selon les figures 1 à 9, disposé symétriquement au premier.

Il peut y avoir intérêt, dans la disposition de la figure 10, à monter le potentiomètre dans un blindage magnétique 20 en tôle d'acier magnétique, par exemple, pour renforcer l'effet d'attraction de l'aimant 6b sur le collecteur 4, ou les collecteurs 4 et 18, par fermeture des circuits magnétiques, suivant les trajets 21, à travers les contre-collecteurs 19 et 19a.

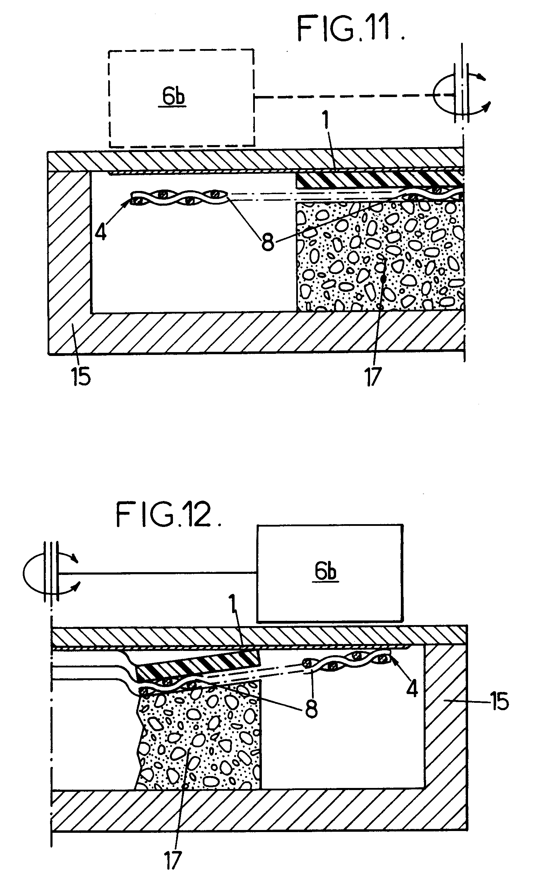

On peut enfin, pour réaliser le potentiomètre de l'invention, adopter une forme compatible avec une rotation, dans le sens de la flèche circulaire, du curseur 6 ou l'aimant 6b, comme illustré sur les figures 11 et 12 (qui sont des demi-coupes de dispositions circulaires).

La piste résistive 1 et le collecteur 4 peuvent prendre alors la forme d'un disque (figure 11) ou d'une couronne (figure 12), éventuellement interrompue par une fente, la cale 11a (non illustrée sur les figures 11 et 12) et le ressort ou élément élastique 17 ayant une forme similaire.

Sur la figure 11 l'aimant 6b a été représenté en pointillés car il n'occupe pas la position indiquée lorsque la partie illustrée à gauche du collecteur 4 est éloignée de la piste résistive 1.

Les perfectionnements précités (second collecteur et/ou contre-collecteur ou contre-collecteurs) prévus pour un potentiomètre rectiligne sont également applicables à un tel potentiomètre circulaire.

Comme il va de soi, l'invention ne se limite nullement aux modes d'application et de réalisation qui ont été plus spécialement envisagés; elle en embrasse, au contraire, toutes les variantes qui satisfont aux revendications.

**Revendications**

1. Potentiomètre commandable par une contrainte mécanique réduite, comprenant une piste résistive (1) allongée dans une direction, avec une connexion électrique (2, 3) à chaque extrémité (2a, 3a), un collecteur conducteur (4) allongé dans la même direction, disposé en regard de ladite piste conductrice, avec une troisième connexion (5), et un organe mobile (6, 6a, 6b), déplaçable dans la direction de l'allongement de la piste résistive et du collecteur conducteur et apte à commander la mise en contact électrique du collecteur et de la piste dans une zone réduite (8d) dont la position dans ladite direction est fonction de la position de l'organe mobile, caractérisé en ce que le collecteur (4) est constitué par une bande de tissu (8) conducteur de l'électricité.

2. Potentiomètre selon la revendication 1, caractérisé en ce que le tissu (8) est réalisé en fibres (8a, 8b) conductrices.

3. Potentiomètre selon la revendication 2, caractérisé en ce que le tissu (8) est en fibres (8a, 8b) d'acier inoxydable.

4. Potentiomètre selon la revendication 2, caractérisé en ce que le tissu (8) est en fibres (8a, 8b) de cuivre.

5. Potentiomètre selon la revendication 2, caractérisé en ce que le tissu (8) est en fibres (8a, 8b) de carbone conducteur.

6. Potentiomètre selon la revendication 1, caractérisé en ce que le tissu (8) est réalisé en fibres (8a, 8b) non conductrices rendues conductrices par un traitement de surface.

7. Potentiomètre selon la revendication 6, caractérisé en ce que le tissu (8) est en fibres (8a, 8b) de polyester recouvertes par une pellicule mince de nickel.

8. Potentiomètre selon l'une quelconque des revendications précédentes, caractérisé en ce que l'organe mobile est un curseur (6) réalisé en un matériau solide et en ce que la face du tissu (8) dirigée vers le curseur (6) est revêtue d'un agent de glissement.

9. Potentiomètre selon l'une quelconque des revendications précédentes, caractérisé en ce que l'organe mobile est réalisé sous la forme d'un jet, liquide ou gazeux, mobile.

10. Potentiomètre selon l'une quelconque des revendications 2 à 8, caractérisé en ce que le tissu (8) est rendu imperméable au moyen d'un enrobage partiel ou pellicule (7), les convexités (8c) des coudes des fibres (8a, 8b) qui peuvent venir en contact avec la piste conductrice 1 n'étant pas revêtues de l'enrobage ou pellicule.

11. Potentiomètre selon l'une quelconque des revendications précédentes, caractérisé en ce qu'il comporte deux bandes (9) de ruban auto-adhésif sur les deux faces disposées sur les deux côtés entre la piste résistive (1) et le collecteur conducteur (4) pour assurer une séparation entre ceux-ci.

12. Potentiomètre selon l'une quelconque des revendications 1 à 10, caractérisé en ce qu'il comporte une seule bande (9) de ruban, auto-adhésif sur les deux faces, sur un côté, entre la piste résistive (1) et le collecteur conducteur (4), pour assurer une séparation entre ceux-ci de ce côté, des moyens, tels que forme incurvée du tissu ou bande non adhésive sur laquelle s'appuie le tissu de l'autre côté, empêchant le contact spontané, en l'absence de la pression de l'organe mobile (6, 6a, 6b), de la piste résistive (1) et du collecteur conducteur (4).

13. Potentiomètre commandable par une contrainte mécanique réduite, selon l'une quelconque des revendications 1 à 10, caractérisé en ce qu'il comporte des moyens (11, 11a) pour maintenir un premier bord longitudinal (12a) du collecteur conducteur (4) écarté du premier bord longitudinal correspondant (13a) de la piste résistive (1), tandis que le second bord longitudinal (12b) du collecteur conducteur est libre de se déplacer par rapport au second bord longitudinal (13b) de la piste résistive et venir en contact avec celui-ci sous le contrôle de l'organe mobile.

14. Potentiomètre selon la revendication 13, caractérisé en ce que lesdits moyens pour maintenir le premier bord longitudinal (12a) du collecteur conducteur (4) écarté du premier bord longitudinal correspondant (13a) de la piste résistive (1) sont constitués par une cale longitudinale fixe (11) disposée entre ces deux bords.

15. Potentiomètre selon la revendication 13, caractérisé en ce que lesdits moyens pour maintenir le premier bord longitudinal (12a) du collecteur conducteur (4) écarté du premier bord longitudinal correspondant (13a) de la piste résistive (1) sont constitués par une cale (11a) qui peut basculer autour d'une de ses arêtes (11c), qui appuie sur la piste résistive au voisinage du barycentre (4f) du collecteur conducteur, contre l'action d'un ressort antagoniste (17), la distance (d) entre cette arête et le barycentre (4f) du collecteur, considérée dans la direction perpendiculaire à celle de la face latérale (11d) de la cale mobile (11a) qui comporte ladite arête (11c), étant nettement inférieure à la distance (p) entre cette arête et la zone d'application de l'organe mobile, considérée dans la même direction que la distance entre l'arête et le barycentre, une partie de la cale (11a) se trouvant disposée entre le barycentre (4f) et la piste résistive (1).

16. Potentiomètre selon l'une quelconque des revendications 1 à 7 et 13 à 15, caractérisé en ce que l'organe mobile est un aimant (6a) ou un électro-aimant, le tissu (8) constituant le collecteur conducteur étant réalisé au moins en partie en un matériau magnétique.

17. Potentiomètre selon l'une quelconque des revendications 1 à 7 et 13 à 15, caractérisé en ce que l'organe mobile est un aimant (6a) ou un électro-aimant et en ce qu'un élément en une matière magnétique est associé au tissu (8), qui est amagnétique, formant le collecteur conducteur (4).

18. Potentiomètre selon la revendication 16 ou 17, caractérisé en ce que l'ensemble du potentiomètre, à l'exception de l'aimant (6a) ou de l'électro-aimant et ses moyens de déplacement, sont disposés à l'intérieur d'un boîtier étanche (10, 15, 14a).

19. Potentiomètre selon l'une quelconque des revendications précédentes, caractérisé en ce qu'il comporte en outre un collecteur conducteur supplémentaire (18) commandé en synchronisme avec ledit collecteur conducteur 4.

20. Potentiomètre selon l'une quelconque des revendications précédentes, caractérisé en ce qu'il comporte en outre au moins un contre-collecteur (19, 19a) disposé symétriquement au dit collecteur conducteur (4), ainsi qu'au collecteur conducteur supplémentaire (18) lorsqu'il existe.

21. Potentiomètre selon l'une quelconque des revendications précédentes, caractérisé en ce que la direction d'allongement de la piste résistive (1) et du collecteur conducteur (4) est circulaire.

**Patentansprüche**

1. Potentiometer, welches mit verminderter mechanischer Beanspruchung betätigbar ist, mit einer in einer Richtung länglich erstreckten Widerstandsspur (1), mit einer elektrischen Verbindung (2,3) an jedem Ende (2a,3a), einem in derselben Richtung länglich erstreckten Kollektorleiter (4), der gegenüberliegend zur Leiterspur angeordnet ist, mit einer dritten Verbindung (5) und einem mobilen Element (6,6a,6b), welches in der Längserstreckungsrichtung der Widerstandsspur und des Kollektorleiters verschiebbar ist und geeignet ist, einen elektrischen Kontakt zwischen dem Kollektor und der Spur in einer verringerten Zone (8d) zu betätigen, deren Position in dieser Richtung eine Funktion der Position des beweglichen Elementes ist,
dadurch gekennzeichnet,
daß der Kollektor (4) von einem Gewebeband mit elektrischer Leitfähigkeit gebildet ist.

2. Potentiometer nach Anspruch 1,
dadurch gekennzeichnet,
daß das Gewebe (8) aus leitenden Fasern (8a,8b) gebildet ist.

3. Potentiometer nach Anspruch 2,
dadurch gekennzeichnet,
daß das Gewebe aus nicht oxidierenden Stahlfasern (8a,8b) besteht.

4. Potentiometer Anspruch 3,

11

dadurch gekennzeichnet,
daß das Gewebe (8) aus Kupferfasern (8a,8b) besteht.

5.  Potentiometer nach Anspruch 2,
dadurch gekennzeichnet,
daß das Gewebe (8) aus leitenden Karbonfasern (8a,8b) besteht.

6.  Potentiometer nach Anspruch 1,
dadurch gekennzeichnet,
daß das Gewebe (8) aus nicht leitenden Fasern (8a,8b) besteht, die durch eine Oberflächenbehandlung leitend gemacht worden sind.

7.  Potentiometer nach Anspruch 6,
dadurch gekennzeichnet,
daß das Gewebe (8) aus Polyesterfasern (8a,8b) besteht, die mit einem dünnen Nickelüberzug beschichtet sind.

8.  Potentiometer nach einem der vorangehenden Ansprüche,
dadurch gekennzeichnet,
daß das mobile Element ein Schiebekontakt (6) ist, der aus einem festen Material besteht und daß die gegen den Schiebekontakt gerichtete Fläche des Gewebes (8) mit einem Gleitmittel versehen ist.

9.  Potentiometer nach einem der vorangehenden Ansprüche,
dadurch gekennzeichnet,
daß das mobile Element in Form eines flüssigen oder gasförmigen, mobilen Strahles verwirklicht ist.

10. Potentiometer nach irgendeinem der Ansprüche 2 bis 8,
dadurch gekennzeichnet,
daß das Gewebe mittels einer teilweisen Umhüllung oder eines Überzuges (7) undurchlässig gemacht ist, wobei die Konvexitäten (8c) der Krümmungen der Fasern (8a,8b), die mit der Leiterspur (1) in Kontakt kommen können, nicht mit einer Umwicklung oder einem Überzug versehen sind.

11. Potentiometer nach irgendeinem der vorangehenden Ansprüche,
dadurch gekennzeichnet,
daß diese zwei beidseitig selbstklebende Bänder (9) aufweist, die zu beiden Seiten zwischen der Widerstandsspur (1) und dem Kollektorleiter (4) zum Sicherstellen einer Trennung zwischen den beiden angeordnet sind.

12. Potentiometer nach irgendeinem der Ansprüche 1 bis 10,
dadurch gekennzeichnet,
daß diese ein einziges beidseitig selbstklebendes Band (9) aufweist, das auf einer Seite zwischen der Widerstandsspur (1) und dem Kollektorleiter (4) zum Sicherstellen einer Trennung zwischen diesen an dieser Seite angeordnet ist, derart, daß dieses eine Krümmung des Gewebes oder des nicht klebenden Bandes bildet, auf welchem sich das Gewebe der anderen Seite abstützt, wodurch in Abwesenheit eines Druckes durch das mobile Element (6,6a,6b) ein spontaner Kontakt der Widerstandsspur (1) und des Kollektorleiters (4) verhindert wird.

13. Potentiometer, welches mit verminderter mechanischer Beanspruchung betätigbar ist, nach irgendeinem der Ansprüche 1 bis 10,
dadurch gekennzeichnet,
daß es Mittel (11,11a) zum Aufrechterhalten eines ersten Längsrandes (12a) des Kollektorleiters (4) entfernt von einem entsprechenden ersten Längsrand (13a) der Widerstandsspur (1) aufweist, während der zweite Längsrand (12d) des Kollektorleiters frei ist, sich im Verhältnis zum zweiten Längsrand (13b) der Widerstandsspur zu verschieben und mit dieser unter der Kontrolle des mobilen Elementes in Kontakt zu kommen.

14. Potentiometer nach Anspruch 13,
dadurch gekennzeichnet,
daß die Mittel zum Aufrechterhalten eines Abstandes zwischen dem ersten Längsrand (12a) des Kollektorsammlers (4) und des entsprechenden ersten Längsrandes (13a) der Widerstandsspur (1) von einem länglichen festen Klotz (11) gebildet sind, der zwischen den beiden Rändern angeordnet ist.

15. Potentiometer nach Anspruch 13,
dadurch gekennzeichnet,
daß die Mittel zum Aufrechterhalten eines Abstandes zwischen dem ersten Längsrand (12a) des Kollektorleiters (4) und des entsprechenden ersten Längsrandes (13a) der Widerstandsspur (1) von einem Klotz (11a) gebildet sind, der um eine seiner Kanten (11c) schwenken kann, der sich auf der Widerstandsspur in der Nachbarschaft des Schwerezentrums (4f) des Kollektorleiters gegen die Kraft eines entgegengerichteten Federelementes (17) abstützt, wobei der Abstand (d) zwischen dieser Kante und dem Schwerezentrum (4f) des Kollektors, betrachtet in der Richtung rechtwinklig zu der lateralen Fläche (11d) des mobilen Keiles (11a), welcher diese Kante (11c) enthält, deutlich kleiner als der Abstand zwischen dieser Kante und der Anwendungszone des mobilen Elementes ist, betrachtet in derselben Richtung wie der Abstand zwischen der Kante und dem Schwerezentrum, wobei ein Bereich des Keils (11a) sich zwischen dem Schwerezentrum (4f) und der Widerstandsspur (1) befindet.

16. Potentiometer nach irgendeinem der Ansprüche 1 bis 7 und 13 bis 15,
dadurch gekennzeichnet,
daß daß mobile Element ein Magnet (6a) oder ein Elektromagnet ist, wobei das den Kollektorleiter bildende Gewebe (8) wenigstens bereichsweise aus magnetischem Material besteht.

17. Potentiometer nach irgendeinem der Ansprüche 1 bis 7 und 13 bis 15,
dadurch gekennzeichnet,
daß das bewegliche Element ein Magnet (6a) oder ein Elektromagnet ist und daß ein Element aus einem magnetischen Material mit dem Gewebe (8) verbunden ist, welches unmagnetisch ist und den Kollektorleiter (4) bildet.

18. Potentiometer nach Anspruch 16 oder 17,
dadurch gekennzeichnet,
daß die Gesamtheit des Potentiometers mit Ausnahme des Magneten (6a) oder des Elektromagneten und der Verschiebemittel innerhalb eines geschlossenen Gehäuses (10,15,14a) angeordnet ist.

19. Potentiometer nach irgendeinem der vorangehenden Ansprüche,
dadurch gekennzeichnet,
daß es außerdem einen zusätzlichen Kollektorleiter (18) aufweist, der synchron mit dem Kollektorleiter (4) betätigbar ist.

20. Potentiometer nach irgendeinem der vorangehenden Ansprüche,
dadurch gekennzeichnet,
daß es außerdem wenigstens einen Gegenkollektor (19,19a) aufweist, der symmetrisch zu dem Kollektorleiter (4) und dem zusätzlichen Kollektorleiter (18), wenn dieser existiert, angeordnet ist.

21. Potentiometer nach irgendeinem der vorangehenden Ansprüche,
dadurch gekennzeichnet,
daß die Längserstreckungsrichtung der Widerstandsspur (1) und des Kollektorleiters (4) kreisförmig ist.

## Claims

1. A potentiometer controllable by a small mechanical stress and comprising a resistive track (1) extending in one direction and with an electric connection (2, 3) at each end (2a, 3a), a conductive collector (4) extending in the same direction and disposed opposite the conductive track and with a third connection (5), and a movable means (6, 6a, 6b) movable in the lengthwise direction of the resistive track and the conductive collector and adapted to control the electric contact between the collector and the track in a small area (8d), the position of which in the aforementioned lengthwise direction depends on the position of the movable means, characterised in that the collector (4) is a strip of electrically conductive fabric (8).

2. A potentiometer according to claim 1,
characterised in that the fabric (8) is made of conductive fibres (8a, 8b).

13

3.  A potentiometer according to claim 2,
    characterised in that the fabric (8) is made of stainless steel fibres (8a, 8b).

4.  A potentiometer according to claim 2,
    characterised in that the fabric (8) is made of copper fibres (8a, 8b).

5.  A potentiometer according to claim 2,
    characterised in that the fabric (8) is made of conductive carbon fibres (8a, 8b).

6.  A potentiometer according to claim 1,
    characterised in that the fabric (8) is made of non-conductive fibres (8a, 8b) which are made conductive by surface treatment.

7.  A potentiometer according to claim 6,
    characterised in that the fabric (8) is of polyester fibres (8a, 8b) covered by a thin film of nickel.

8.  A potentiometer according to any of the preceding claims, characterised in that the movable means is a sliding contact (6) made of a solid material and in that the surface of the fabric (8) facing the sliding contact (6) is coated with a sliding agent.

9.  A potentiometer according to any of the preceding claims, characterised in that the movable means is in the form of a movable jet of liquid or gas.

10. A potentiometer according to any of claims 2 to 8, characterised in that the fabric (8) is waterproofed by a partial coating or film (7), and the convex parts (8c) of the bends in the fibres (8a, 8b) capable of making contact with the conductive track (1) are not covered by the coating or film.

11. A potentiometer according to any of the preceding claims, characterised in that it comprises two strips (9) of self-adhesive tape on the two surfaces disposed on the two sides between the resistive track (1) and the conductive collector (4) in order to separate them.

12. A potentiometer according to any of claims 1 to 10, characterised in that it comprises a single strip (9) of tape, self-adhesive on both surfaces, on one side between the resistive track (1) and the conductive collector (4) in order to separate them on this side, whereas means such as the curved shape of the non-adhesive fabric or strip on which the fabric rests on the other side prevents spontaneous contact between the resistive track (1) and the conductive collector (4) in the absence of pressure by the movable means (6, 6a, 6b).

13. A potentiometer controllable by a small mechanical stress according to any of claims 1 to 10, characterised in that it comprises means (11, 11a) for keeping a first longitudinal edge (12a) of the conductive collector (4) away from the corresponding first longitudinal edge (13a) of the resistive track (1), whereas the second longitudinal edge (12b) of the conductive collector is free to move relative to the second longitudinal edge (13b) of the resistive track and to make contact therewith under the control of the movable means.

14. A potentiometer according to claim 13,
    characterised in that the means for keeping the first longitudinal edge (12a) of the conductive collector (4) away from the corresponding first longitudinal edge (13a) of the resistive track (1) comprise a fixed longitudinal block (11) disposed between the two edges.

15. A potentiometer according to claim 13,
    characterised in that the means for keeping the first longitudinal edge (12a) of the conductive collector (4) away from the corresponding first longitudinal edge (13a) of the resistive track (1) comprise a block (11a) which can tilt around one of its edges (11c) and rests on the resistive track near the centre of gravity (4f) of the conductive collector, against the action of an opposing spring (17), the distance (d) between the edge and the centre of gravity (4f) of the collector, considered in the direction at right angles to the lateral surface (11d) of the movable block (11a) comprising the edge (11c) being appreciably less than the distance (p) between the edge and the area of application of the movable means, considered in the same direction as the distance between the edge and the centre of gravity, a part of the block (11a) being disposed between the centre of gravity (4f) and the resistive track (1).

16. A potentiometer according to any of claims 1 to 7 and 13 to 15, characterised in that the movable means is a magnet (6a) or electromagnet, and the fabric (8) constituting the conductive collector is at least partly made from a magnetic material.

17. A potentiometer according to any of claims 1 to 7 and 13 to 15, characterised in that the movable means is a magnet (6a) or an electromagnet and a component made of magnetic material is associated with the fabric (8) (which is non-magnetic) forming the conductive collector (4).

18. A potentiometer according to claim 16 or 17,
characterised in that the potentiometer assembly, apart from the magnet (6a) or the electromagnet and the means for moving it, are disposed inside a sealing-tight casing (10, 15, 14a).

19. A potentiometer according to any of the preceding claims, characterised in that it also comprises an additional conductive collector (18) controlled in synchronism with the conductive collector (4).

20. A potentiometer according to any of the preceding claims, characterised in that it also comprises at least one counter-collector (19, 19a) disposed symmetrically with the conductive collector (4) and with the additional conductive collector (18) if present.

21. A potentiometer according to any of the preceding claims, characterised in that the direction of elongation of the resistive track (1) and of the conductive collector (4) is circular.

FIG.1.

FIG.2.

FIG.3.

FIG.4.

EP 0 353 127 B1

FIG.5.

FIG.7.

EP 0 353 127 B1

FIG. 6.

FIG. 8.

FIG. 9.

19

FIG. 10.

EP 0 353 127 B1

FIG.11.

FIG.12.